(19) Europäisches Patentamt
European Patent Office
Office européen des brevets

(11) **EP 2 554 897 A1**

(12) **EUROPÄISCHE PATENTANMELDUNG**

(43) Veröffentlichungstag:
**06.02.2013 Patentblatt 2013/06**

(51) Int Cl.:
*F21S 8/00* (2006.01)   *F21V 7/00* (2006.01)
*G02B 6/00* (2006.01)

(21) Anmeldenummer: **11176532.7**

(22) Anmeldetag: **04.08.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Odelo GmbH
71409 Schwaikheim (DE)**

(72) Erfinder:
• **Vollmer, Marco
71332 Waiblingen (DE)**
• **Bisch, Valentin
70193 Stuttgart (DE)**

(74) Vertreter: **Benninger, Johannes
Benninger & Eichler-Stahlberg
Patentanwälte
Dr.-Leo-Ritter-Strasse 5
93049 Regensburg (DE)**

(54) **Lichtleiter, Leuchtmittel und Kraftfahrzeugleuchte**

(57) Es werden ein Lichtleiter (01), ein einen solchen Lichtleiter (01) umfassendes Leuchtmittel (04) sowie eine mit mindestens einem derartigen Leuchtmittel (04) ausgestattete Kraftfahrzeugleuchte beschrieben. Der Lichtleiter (01) umfasst wenigstens:
- einen mindestens eine erste Lichteinkoppelfläche (10) umfassenden ersten Lichteinkoppelbereich (11),
- einen mindestens eine zweite Lichteinkoppelfläche (20) umfassenden zweiten Lichteinkoppelbereich (21),
- einen dem ersten Lichteinkoppelbereich (11) derart zugeordneten, mindestens eine erste Lichtauskoppelfläche (30) umfassenden ersten Lichtauskoppelbereich (31), dass in den ersten Lichteinkoppelbereich (11) eingekoppeltes Licht am ersten Lichtauskoppelbereich (31) aus dem Lichtleiter (01) in wenigstens einer Vorzugsrichtung (32) ausgekoppelt wird,
- einen dem zweiten Lichteinkoppelbereich (21) derart zugeordneten, mindestens eine zweite Lichtauskoppelfläche (40) umfassenden zweiten Lichtauskoppelbereich (41), dass in den zweiten Lichteinkoppelbereich (21) eingekoppeltes Licht am zweiten Lichtauskoppelbereich (41) aus dem Lichtleiter (01) in wenigstens einer Vorzugsrichtung (42) ausgekoppelt wird, wobei
- der erste Lichtauskoppelbereich (31) entfernt zum ersten Lichteinkoppelbereich (11) und benachbart zum zweiten Lichteinkoppelbereich (21) angeordnet ist, und
- der zweite Lichtauskoppelbereich (41) entfernt zum zweiten Lichteinkoppelbereich (21) und benachbart zum ersten Lichteinkoppelbereich (11) angeordnet ist, und
- zwischen den einander zugeordneten Lichteinkoppel- und Lichtauskoppelbereichen (11, 31 bzw. 21, 41) wenigstens ein einem anderen Lichteinkoppelbereich (21, 11) zugeordneter Lichtauskoppelbereich (41, 31) liegt.

Fig. 1

**Beschreibung**

Die Erfindung betrifft einen Lichtleiter gemäß dem Oberbegriff des Anspruchs 1, ein Leuchtmittel umfassend einen solchen Lichtleiter gemäß dem Oberbegriff des Anspruchs 10 sowie eine Kraftfahrzeugleuchte mit mindestens einem zuvor genannten Leuchtmittel gemäß dem Oberbegriff des Anspruchs 11.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Kammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Darüber hinaus können bei einer Kraftfahrzeugleuchte ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche ein- und an mindestens einer von der Lichteinkoppelfläche verschiedenen Lichtauskoppelfläche wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Der Lichtleiter dient dabei der Erzielung einer Erfüllung einer beispielsweise durch gesetzliche Anforderungen vorgeschriebenen Lichtverteilungen in eine oder mehrere Vorzugsrichtungen und Leuchtdichte in dieser einen oder mehreren Vorzugsrichtungen unter gleichzeitig größtmöglicher Anpassung an die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf wider.

Damit das aus einer Lichtauskoppelfläche austretende Licht bei einem solchen Lichtleiter einer bestimmten, bei einer Kraftfahrzeugleuchte gesetzlich vorgegebenen Lichtverteilung in eine oder mehrere Vorzugsrichtungen und Leuchtdichte in dieser einen oder mehreren Vorzugsrichtungen der Lichtauskopplung aus dem Lichtleiter genügt, sind beispielsweise auf einer der Lichtauskoppelfläche gegenüberliegenden Rückseite des Lichtleiters vorgesehene Lichtleiterauskoppelstrukturen mit einer gerichteten Auskopplung des in den Lichtleiter eingekoppelten Lichts in einer oder mehreren Vorzugsrichtungen beispielsweise über die gesamte Länge des Lichtleiters hinweg bekannt.

Diese Lichtleiterauskoppelstrukturen umfassen eine beispielsweise auf der Lichtleiterrückseite angeordnete, totalreflektierende Prismenstruktur, welche das Licht im Lichtleiter umlenkt und an einer gegenüberliegenden oder angrenzenden Lichtauskoppelfläche unter Brechung beim Übergang vom Lichtleitermaterial zur umgebenden Luft in mindestens einer Vorzugsrichtung unter Einhaltung einer den lichttechnischen Anforderungen in der mindestens einen Vorzugsrichtung genügenden Leuchtdichte auszukoppeln.

Dabei kommt es jedoch insbesondere bei starken Strakverläufen angepassten, stark gekrümmt verlaufenden Lichtleitern, wie sie insbesondere in Kraftfahrzeugleuchten benötigt werden, um der Form einer in die Außenkontur eines Kraftfahrzeugs eingepassten Lichtscheibe einer Kraftfahrzeugleuchte zu folgen, aufgrund der gezielten Umlenkung in die eine oder mehreren Vorzugsrichtungen zu einer lokal stark inhomogenen Leuchtdichtenverteilung bei der Betrachtung aus einem Betrachtungswinkel. Diese macht sich durch eine mit bloßem Auge wahrnehmbar punktuell unterschiedlichen Helligkeiten im Erscheinungsbild des Lichtleiters bemerkbar. Dies wird als störend und den Qualitätseindruck nachhaltig negativ beeinflussend empfunden.

Dieser störende Eindruck wird zusätzlich verstärkt bei Lichtleitern, bei denen die Lichteinkopplung aufgrund des Strakverlaufs entgegen der üblichen Einstrahlrichtung erfolgen muss. Die übliche Einstrahlrichtung des Lichts in den Lichtleiter ist diejenige Richtung, welche in ihrer Raumrichtung betrachtet nahe bzw. näher an der mindestens einen Vorzugsrichtung der Lichtauskopplung der Kraftfahrzeugleuchte bzw. der jeweiligen Lichtfunktion der Kraftfahrzeugleuchte liegt. Aufgrund eines beispielsweise starken Strakverlaufs und eines begrenzten zur Verfügung stehenden Bauraums ist es nicht immer möglich, die Lichtquellen in einer derart günstigen Lage einzubauen, dass deren Licht in der genannten üblichen Einstrahlrichtung in den Lichtleiter eingekoppelt werden kann. Daher kann es erforderlich sein, eine Lichteinkopplung entgegen der üblichen Einstrahlrichtung vorzusehen.

Eine Lichteinkopplung entgegen der üblichen Einstrahlrichtung kommt beispielsweise beim Stand der Technik bei als so genannte Heckdeckelleuchten ausgeführten Kraftfahrzeugleuchten vor, da hier meist zuwenig Bauraum durch den Rand des Kofferraumdeckels vorhanden ist. Weiterhin ist zu beachten, dass eine durch eine Seitenwandleuchte und eine Heckdeckelleuchte gleichzeitig erfüllte Lichtfunktion auch im gesamten betrachtet die gesetzlichen Vorgaben erfüllen muss. Im Heckdeckel sind allerdings z. B. die Anforderungen an die gesetzlichen Schlusslichtwerte weniger schwer umzusetzen als bei Seitenwandleuchten. Hierbei ist wichtig zu wissen, dass eine Seitenwandleuchte oft auch alleine die gesetzlich geforderten Werte vollständig erfüllen muss. Die Abstrahlung der Heckdeckelleuchte darf im Wesentlichen, und vereinfacht für die meisten Fälle ausgedrückt, nicht zu einer Überschreitung der maximalen Lichtwerte führen, für den Fall, dass Heckdeckelleuchte und Seitenwandleuchte gleichzeitig leuchten.

Zur Auskopplung von Licht aus einem Lichtleiter, in den entgegen der üblichen Einstrahlrichtung Licht eingekoppelt wird, ist eine kostspielige, ineffiziente und aufwändig herzustellende Doppelbrechung oder eine ebenso kostspielige, ineffiziente und aufwändig herzustellende rückseitige Metallisierung des Lichtleiters nötig. Hierfür ist eine hohe und damit kostspielige Fertigungspräzision erforderlich. Ein weiterer Nachteil ergibt sich durch eine eingeschränkte, den Wirkungsgrad des optischen Systems widerspiegelnde optische Güte. Hierbei muss mehr Licht in die Lichteinkoppelfläche eingekoppelt werden, um eine bestimmte Leuchtdichte an der Lichtauskoppelfläche zu erhalten.

Ein weiterer Nachteil ist, dass hierbei nur eine Leuchtdichtenverteilung mit Vorzugsrichtungen in einem sehr engen Winkelbereich erfüllt werden kann.

Eine rückseitige Metallisierung des Lichtleiters ist demgegenüber aufgrund des begrenzten Reflektionsgrads und der damit einhergehenden Absorptionsverluste der Metallisierung ineffizienter.

Beispielsweise um ein homogenes Erscheinungsbild zu erhalten, welches frei von punktuell unterschiedlichen Helligkeiten ist, ist bekannt, Auskoppelstrukturen vorzusehen, die jedoch keine definierte Auskopplung in einer Vorzugsrichtung zulassen. Beispiele hierfür sind Diffusor-Strukturen, welche auf einer ungerichteten Ablenkung des Lichts an mikroskopisch kleinen, typischerweise auf einer der Lichtauskoppelfläche gegenüberliegenden Lichtleiterrückseite vorgesehenen Flächen beruhen. Solche Diffusor-Strukturen werden beispielsweise durch eine gezielte, jedoch einer statistischen Verteilung unterliegende Oberflächenrauigkeit erhalten. Vermittels Streuung wird hierbei Licht in die Vorzugsrichtung gelenkt.

Nachteilig hieran ist, dass mit solchen Diffusor-Strukturen keine gezielte Auskopplung in einer oder mehreren beispielsweise durch gesetzliche Vorgaben definierten Vorzugsrichtungen möglich ist. Um demnach bei einer solchen, ein homogenes Erscheinungsbild aufweisenden Diffusor-Struktur beispielsweise gesetzliche Vorgaben durch Einhaltung eines den lichttechnischen Anforderungen in Vorzugsrichtung genügenden Leuchtdichte zu erfüllen, muss eine wesentlich höhere Lichtstrahlungsleistung bzw. ein wesentlich höherer Lichtstrom in den Lichtleiter eingekoppelt werden, was einerseits einen hohen Bauraumbedarf zur Folge hat, andererseits aufgrund der hierfür erforderlichen stärkeren und/oder mehreren Lichtquellen höhere Kosten nach sich zieht und außerdem zu einem unnötig hohen Stromverbrauch einhergehend mit einer stärkeren Belastung und damit Auslegung des Bordnetzes eines Kraftfahrzeugs führt. Außerdem kann vermittels Diffusor-Strukturen der entlang des Lichtleiters lokal ausgekoppelte Lichtstrom nicht gut oder gar nicht gesteuert werden, was jedoch notwendig ist, um beispielsweise auch Endbereiche eines Lichtleiters hell erscheinen zu lassen. Aufgrund der hohen Streuung in die von der Vorzugsrichtung abweichenden, verbleibenden Winkelbereiche sind beispielsweise durch Aufrauung hergestellte Diffusor-Strukturen ineffizient.

Darüber hinaus ist bekannt, eine totalreflektierende Prismenstruktur mit wohldefinierten Prismenelementen auf einer der Lichtauskoppelfläche gegenüberliegenden Lichtleiterrückseite vorzusehen, und an der Lichtauskoppelfläche Diffusor-Strukturen mit einer statistischen Verteilung der Wirkelemente, beispielsweise zusätzliche Deckelemente mit rauer Oberfläche, und/oder eine oder mehrere diffus reflektierende Umgebungsflächen des Lichtleiters vorzusehen.

Außerdem sind Lichtleiter mit einer glatten Lichtleiterrückseite und einer rauen Frontfläche als Auskoppelfläche bekannt.

Auch diese Maßnahmen genügen nicht, um die geschilderten Nachteile zumindest ansatzweise zu lösen.

Zur Hintergrundbeleuchtung von LCD-Displays ist ferner bekannt, eine regelmäßige Auskoppelstruktur vorzusehen, welche eine Vorzugsrichtung der Lichtauskopplung normal zur Vorderseite des LCD-Displays bewirkt. Deren Verwendung bei Kraftfahrzeugleuchten scheitert jedoch am im Raum dreidimensional gekrümmten Verlauf von Lichtleitern in Kraftfahrzeugleuchten und der damit aus Sicht des Lichtleiters mit der Krümmung lokal veränderlichen Vorzugsrichtung.

Durch US 7,431,481 B2 ist ein starres Lichtleiterelement mit auf seiner einer ebenen Lichtauskoppelfläche gegenüberliegenden Lichtleiterrückseite vorgesehenen Prismenstrukturen bekannt. Diese Prismenstrukturen dienen einer Lichtauskopplung in einer normal zur Lichtauskoppelfläche orientierten Vorzugsrichtung.

Nachteilig hieran ist neben dem komplexen Aufbau, dass wenn mehrere Vorzugsrichtungen mit einem solchen Lichtleiterelement verwirklicht werden sollen, keine homogene Leuchtdichtenverteilung erhalten werden kann. Darüber hinaus ist das Lichtleiterelement nicht geeignet, einem gekrümmten Verlauf einer Lichtscheibe zu folgen.

Durch US 7,401,963 B2 ist ein Lichtleiterelement mit verschiedenen, auf mehreren Lichtauskoppelflächenpartien gegenüberliegenden Lichtleiterrückseitenpartien angeordneten Prismenstrukturen bekannt. Darüber hinaus ist inmitten einer Lichteinkoppelpartie auf der Lichtleiterrückseite ein durch eine eine interne Totalreflexion bewirkende Aussparung hergestelltes Prisma vorgesehen. Das eingekoppelte Licht wird dabei zunächst an dem Prisma, anschließend an einer ersten Prismenstruktur und daraufhin an einer zweiten Prismenstruktur gezielt rechtwinklig umgelenkt, bis es durch die an ihren Oberflächen glatt ausgeführten, in einer Ebene liegenden, gewölbten Lichtauskoppelflächenpartien durch eine von der lokalen Orientierung der gewölbten Lichtauskoppelflächenpartien abhängigen Brechung in mehrere Richtungen gestreut wird.

Nachteilig hieran ist, dass für einen Betrachter die gewölbten Lichtauskoppelflächenpartien nur in denjenigen Bereichen hell erscheinen, in denen Licht in seine Richtung austritt. Damit wird weder eine für den Betrachter homogene Leuchtdichtenverteilung erhalten, noch ist das Lichtleiterelement aufgrund seines sehr komplizierten Aufbaus in Verbindung mit der Vielzahl der rechtwinkligen Lichtumlenkungen zur Anpassung an einen gekrümmten Verlauf einer Lichtscheibe geeignet.

Durch EP 1 561 070 B1 ist ein Lichtleiterelement bekannt, das allgemein betrachtet aus zwei parallel angeordneten, an den aneinander anliegenden Flächen miteinander verbundenen Lichtleitern besteht. Prismenstrukturen auf zwei gemeinsam die Rückseite des Lichtleiterelements bildenden Lichtleiterrückseitenpartien dienen einer Lichtauskopplung in einer normal zu einer der Lichtleiterrückseite gegenüberliegenden, ebenen gemeinsamen Lichtauskoppelfläche orientierten Vorzugsrichtung. Die gemeinsame Lichtauskoppelfläche weist zwei jeweils einer Lichtleiterrückseitenpartie zugeordnete Lichtauskoppelflächenpartien auf. Vermittels überlappender, gegenläufiger Prismenstrukturen auf den zwei der Lichtauskoppelfläche gegenüberliegenden Lichtleiterrückseitenpartien und beidseitige Lichteinkopplung an zwei gegenüberliegenden, die Endbereiche des Lichtleiterelements bildende und die gemeinsame Lichtauskoppelfläche mit der Lichtleiterrückseite verbindenden Lichteinkoppelflächen wird einerseits eine gleichmäßige Ausleuchtung der gemeinsamen Lichtauskoppelfläche erhalten und darüber hinaus eine helle Erscheinung auch der Endbereiche des Lichtleiters bei einer Betrachtung aus einer der Vorzugsrichtung der Lichtauskopplung entsprechenden Richtung normal zur durch eine Lichtleitervorderseite gebildeten gemeinsamen Lichtauskoppelfläche.

Nachteilig hieran ist, dass wenn mehrere Vorzugsrichtungen mit einem solchen Lichtleiterelement verwirklicht werden sollen, keine homogene Leuchtdichtenverteilung erhalten werden kann. Darüber hinaus ist das ebene Lichtleiterelement nicht geeignet, einem gekrümmten Verlauf einer Lichtscheibe zu folgen. Ein weiterer Nachteil ist, dass von dem einen Lichtleiter in den anderen Lichtleiter gelangendes Licht nicht durch die gemeinsame Lichtauskoppelfläche austreten kann. Es tritt im jeweils anderen Lichtleiter des Lichtleiterelements unkontrolliert aus und geht verloren. In jedem Fall steht es nicht zum gewünschten Zweck einer Abstrahlung in der Vorzugsrichtung zur Verfügung.

Durch DE 198 04 440 A1 ist bekannt, einen stabförmigen Lichtleiter für eine Kraftfahrzeugleuchte mit einer dem Lichtstrom im Lichtleiter angepassten Prismenstruktur auf seiner der sich entlang der Stabform erstreckenden Lichtauskoppelfläche abgewandten Lichtleiterrückseite zu versehen, um eine homogene Ausleuchtung des Lichtleiters zu erhalten. Die Anpassung sieht vor, dass die über die gesamte Länge identisch beabstandeten und identisch geformten Prismen um so breiter sind, je kleiner der Lichtstrom im Lichtleiter. Dabei nimmt der Lichtstrom im Lichtleiter von einer von der Lichtauskoppelfläche verschiedenen, durch eine Stirnfläche an einem ersten Ende des Lichtleiters gebildeten Lichteinkoppelfläche ausgehend zu einem von dem ersten Ende entfernten zweiten Ende hin durch eine über die Länge des Lichtleiters stattfindende Lichtauskopplung ab.

Nachteilig hieran ist, dass der gerade, stabförmige Lichtleiter über seine gesamte Länge eine identische Vorzugsrichtung der Lichtauskopplung in Bezug auf die Lichtauskoppelfläche aufweist. Wird der stabförmige Lichtleiter gekrümmt angeordnet, verändert sich diese Vorzugsrichtung mit der sich durch die Krümmung verändernden lokalen Orientierung der Lichtaustrittsfläche des Lichtleiters. Eine Erfüllung gesetzlicher Vorgaben bezüglich Lichtverteilung und Leuchtdichte ist damit nur durch eine entsprechende Erhöhung der eingekoppelten Lichtstärke möglich, einhergehend mit den Eingangs erwähnten Nachteilen eines hohen Bauraumbedarfs für die entsprechend stark dimensionierte mindestens eine Lichtquelle, der höheren Kosten aufgrund der hierfür erforderlichen stärkeren und/oder mehreren Lichtquellen, sowie des unnötig hohen Stromverbrauchs einhergehend mit einer stärkeren Belastung und damit Auslegung des Bordnetzes eines Kraftfahrzeugs. Darüber hinaus scheint jeweils nur der mit der Prismenstruktur hinterlegte Teil der Lichtauskoppelfläche aus Richtung der Vorzugsrichtung gesehen hell. Verbleibende Teile, beispielsweise solche, in denen sich die Prismen nur über einen Teil der Breite der Lichtleiterrückseite erstrecken erschenen demgegenüber dunkel. Dadurch weist der Lichtleiter zwar über seine Länge messtechnisch homogene Leuchtdichte in Vorzugsrichtung auf, erscheint jedoch insbesondere bei einem gekrümmten Verlauf über seine Länge hinweg unterschiedlich hell sowie in seiner Breite unterschiedlich ausgeleuchtet.

Der Erfindung liegt die Aufgabe zu Grunde, einen Lichtleiter, ein Leuchtmittel mit einem Lichtleiter und eine Kraftfahrzeugleuchte mit einem einen Lichtleiter umfassenden Leuchtmittel zu entwickeln, welche auch bei einem stark gekrümmten Strakverlauf eine hohe optische Güte unter Einhaltung einer gezielten Lichtauskopplung in mindestens einer vorgegebenen Lichtverteilung und Leuchtdichte in einer oder mehreren Vorzugsrichtungen bei vorzugsweise homogener Leuchtdichtenverteilung aufweisen.

Die Aufgabe wird jeweils gelöst mit den Merkmalen der unabhängigen Ansprüche.

Ein erster Gegenstand der Erfindung betrifft demnach einen beispielsweise stabförmigen, vorzugsweise beispielsweise in einer Ebene und/oder besonders bevorzugt dreidimensional im Raum gekrümmt verlaufenden Lichtleiter mit mindestens einer Lichteinkoppelfläche sowie mindestens einer von der wenigstens einen Lichteinkoppelfläche verschiedenen Lichtauskoppelfläche. Darüber hinaus kann der Lichtleiter wenigstens einer von der zumindest einen Lichtauskoppelfläche verschiedene Lichtumlenkfläche aufweisen, welche im Lichtleiter geführtes Licht in einer oder mehreren Vorzugsrichtungen aus diesem auskoppelt und/oder innerhalb des Lichtleiters gezielt in einer oder mehreren Richtungen zu einer Lichtauskoppelfläche hin umlenkt, dass das Licht an der Lichtauskoppelfläche unter Brechung beim Übergang vom Lichtleitermaterial zum umgebenden Medium, beispielsweise zur umgebenden Luft, in wenigstens einer Vorzugsrichtung ausgekoppelt wird.

Der Lichtleiter weist einen mindestens eine erste Lichteinkoppelfläche umfassenden ersten Lichteinkoppelbereich und einen mindestens eine zweite Lichteinkoppelfläche umfassenden zweiten Lichteinkoppelbereich auf.

Darüber hinaus weist der Lichtleiter einen dem ersten Lichteinkoppelbereich derart zugeordneten, mindestens eine erste Lichtauskoppelfläche umfassenden ersten Lichtauskoppelbereich auf, dass in den ersten Lichteinkoppelbereich eingekoppeltes Licht am ersten Lichtauskoppelbereich aus dem Lichtleiter in wenigstens einer Vorzugsrichtung ausgekoppelt wird.

Ferner weist der Lichtleiter einen dem zweiten Lichteinkoppelbereich derart zugeordneten, mindestens eine zweite Lichtauskoppelfläche umfassenden zweiten Lichtauskoppelbereich auf, dass in den zweiten Lichteinkoppelbereich eingekoppeltes Licht am zweiten Lichtauskoppelbereich aus dem Lichtleiter in wenigstens einer Vorzugsrichtung ausgekoppelt wird.

Dabei ist der erste Lichtauskoppelbereich entfernt zum ersten Lichteinkoppelbereich und benachbart, vorzugsweise angrenzend oder zumindest nahe zum zweiten Lichteinkoppelbereich angeordnet. Der zweite Lichtauskoppelbereich ist entfernt zum zweiten Lichteinkoppelbereich und benachbart, vorzugsweise angrenzend oder zumindest nahe zum ersten Lichteinkoppelbereich angeordnet.

Hierdurch wird das jeweils an den Lichteinkoppelbereichen in den Lichtleiter eingekoppelte Licht bis zu dessen Auskopplung an den Lichtauskoppelbereichen zunächst im Lichtleiter bevorzugt entgegen einer Strakrichtung bzw. einer üblichen Einstrahlrichtung durch einen dem jeweils anderen Lichteinkoppelbereich zugeordneten Lichtauskoppelbereich hindurch geführt und erst dann in einem zur Lichtauskopplung günstigen Bereich des Straks ausgekoppelt.

Außerdem liegt so zwischen den einander zugeordneten Lichteinkoppel- und Lichtauskoppelbereichen wenigstens ein einem anderen Lichteinkoppelbereich zugeordneter Lichtauskoppelbereich.

Vorzugsweise ist vorgesehen, das in den Lichteinkoppelbereichen jeweils eingekoppelte Licht zunächst über mindestens ein Viertel des Lichtleiters durch einen dem jeweils anderen Lichteinkoppelbereich zugeordneten Lichtauskoppelbereich hindurch zu führen und erst dann durch die Verwendung beispielsweise von Prismenstrukturen in den den Lichteinkoppelbereichen zugeordneten Lichtauskoppelbereichen gezielt gesteuert auszukoppeln. Alternativ kann das Licht nur über einen kürzeren Teil des Lichtleiters geführt werden, bevor es ausgekoppelt wird.

Vorzugsweise sind die beiden Lichteinkoppelbereiche an zwei gegenüberliegenden, Endbereiche des Lichtleiters bildenden Lichteinkoppelflächen vorgesehen. Hierdurch ist eine beidseitige Lichteinkopplung verwirklicht.

Der Lichtleiter ist bevorzugt stabförmig, wobei die die beiden Endbereiche des Stablichtleiters abschließenden Stirnseiten jeweils eine Lichteinkoppelfläche bilden, welche eine sich entlang einer Mittelachse des Lichtleiters erstreckende und jeweils eine Lichtauskoppelfläche des ersten Lichtauskoppelbereichs und des zweiten Lichtauskoppelbereichs umfassende Lichtleitervorderseite mit einer sich entlang einer Mittelachse des Lichtleiters erstreckenden und bevorzugt zumindest eine Lichtumlenkfläche umfassenden Lichtleiterrückseite verbindet. Eine Mittelachse kann dabei beispielsweise definiert sein als stetige oder unstetige mathematische Kurve, auf der die Schwerpunkte aller aufeinander folgender Querschnittsflächen des Lichtleiters liegen. Aus dieser möglichen Unstetigkeit heraus ergibt sich die Möglichkeit, dass der Lichtleiter in aufeinander folgenden Abschnitten bzw. Bereichen verschiedene Mittelachsen aufweist, weshalb wenn im Folgenden von einer Mittelachse die Rede ist, es sich um mindestens eine Mittelachse handeln kann.

Der Stablichtleiter kann beispielsweise C-, F-, J-, T-, γ-, L-, G-, V-, oder U-förmig gekrümmt verlaufen. Grundsätzlich ist auch eine M- oder W-förmig gekrümmte Ausführung denkbar. Bei den genannten Formen sind an spitz- oder rechtwinkligen Abzweigen der C-, F-, J-, T-, γ-, L-, G-, V-, U-, M oder W-förmigen Grundform weiche und stetige Übergänge ausgebildet.

Die mindestens eine Lichtumlenkfläche ist bevorzugt auf wenigstens einer den Lichtauskoppelflächen der beiden Lichtauskoppelbereiche gegenüberliegenden Lichtleiterrückseite angeordnet oder von einer solchen umfasst oder umfasst eine solche.

Die mindestens eine Lichtumlenkfläche umfasst vorzugsweise zumindest zum Teil wenigstens eine beispielsweise totalreflektierende Prismenstruktur, vermittels der in den Lichtleiter an wenigstens einer Lichteinkoppelfläche eingekoppeltes Licht gezielt in einer oder mehreren Richtungen zur der jeweiligen Lichteinkoppelfläche zugeordneten Lichtauskoppelfläche hin umgelenkt und an der Lichtauskoppelfläche unter Brechung beim Übergang vom Lichtleitermaterial zum umgebenden Medium, beispielsweise zur umgebenden Luft, in wenigstens einer Vorzugsrichtung unter Einhaltung einer beispielsweise gesetzlich vorgegebenen lichttechnischen Anforderungen an eine Kraftfahrzeugleuchte in einer oder mehreren Vorzugsrichtungen genügenden Leuchtdichte ausgekoppelt wird. Die Vorzugsrichtungen sind dabei durch eine ebenfalls beispielsweise gesetzlich vorgegebene Lichtverteilung definiert.

Die Lichtauskoppelbereiche können mit wenigstens einer Diffusor-Struktur versehen sein, vermittels der in den Lichtleiter an den Lichteinkoppelbereichen eingekoppeltes Licht mit einer statistischen Verteilung umgelenkt und an den Lichtauskoppelflächen unter Brechung beim Übergang vom Lichtleitermaterial zum umgebenden Medium diffus ausgekoppelt wird. Die Diffusor-Struktur kann beispielsweise an der oder an einer Lichtumlenkfläche vorgesehen sein.

Ein zweiter Gegenstand der Erfindung betrifft ein Leuchtmittel mit mindestens zwei Lichtquellen und wenigstens einem diesen zugeordneten, zuvor beschriebenen Lichtleiter. In den Lichtleiter wird Licht mindestens zweier Lichtquellen an mindestens zwei verschiedenen Lichteinkoppelbereichen zugeordneten Lichteinkoppelflächen ein-und an mindestens zwei, verschiedenen Lichtauskoppelbereichen zugeordneten, von den Lichteinkoppelflächen verschiedenen Lichtauskoppelflächen wieder ausgekoppelt.

Das Leuchtmittel kann wenigstens eine Lichtemittierende Diode (LED) und/oder einen LED-Chip als Lichtquelle umfassen.

Der Lichtleiter kann an wenigstens eine LED oder wenigstens einen LED-Chip angespritzt sein. In diesem Fall wird eine Lichteinkoppelfläche von den jeweils an eine LED bzw. einen LED-Chip unmittelbar anstoßenden Partien des Lichtleiters umfasst.

Ein dritter Gegenstand der Erfindung betrifft eine Kraftfahrzeugleuchte mit einem von einem Leuchtengehäuse und einer Lichtscheibe umschlossenen Leuchteninnenraum und mindestens einem darin beherbergten Leuchtmittel für wenigstens eine Lichtfunktion der Kraftfahrzeugleuchte. Das mindestens eine Leuchtmittel umfasst neben wenigstens zwei Lichtquelle zumindest einen den wenigstens zwei Lichtquellen zugeordneten, zuvor beschriebenen Lichtleiter.

Die Kraftfahrzeugleuchte kann beispielsweise als Heckleuchte für ein Kraftfahrzeug ausgebildet sein.

Es ist ersichtlich, dass die Erfindung in jedem Fall verwirklicht sein kann durch einen Lichtleiter, bei dem Licht von verschiedenen Lichtquellen an Lichteinkoppelflächen eingekoppelt wird, die beispielsweise an gegenüberliegenden Enden des Lichtleiters vorgesehene Lichteinkoppelbereiche bilden. Jedem der an den beiden gegenüberliegenden Bereichen angeordneten Lichteinkoppelbereiche ist ein Lichtauskoppelbereich mit mindestens einer Lichtauskoppelfläche zugeordnet. Zumindest der Hauptteil des von der jeweiligen Lichtquelle jeweils in die Lichteinkoppelbereiche eingekoppelten Lichts wird im Lichtleiter zunächst durch einen dem jeweils anderen Lichteinkoppelbereich zugeordneten Lichtauskoppelbereich geführt. Hierdurch kann das Licht durch wenigstens 1/4 des Lichtleiters geleitet werden, ohne signifikant ausgekoppelt zu werden. Erst wenn das Licht den derjenigen Lichteinkoppelfläche zugeordneten Lichtauskoppelbereich erreicht, über welche das Licht in den Lichtleiter eingekoppelt wurde, wird es aus dem Lichtleiter heraus gelenkt.

Vorteile gegenüber dem Stand der Technik ergeben sich unter Anderem dadurch, dass Licht von Lichtquellen an solchen Stellen in einen Lichtleiter eingekoppelt werden kann, an denen ausreichend Bauraum beispielsweise für eine zur Anordnung und elektrischen Kontaktierung beispielsweise von LEDs als Lichtquellen erforderliche Leuchtmittelträger zur Verfügung steht. Darüber hinaus kann das Licht günstig vorgelenkt werden, um es anschließend mit Optikelementen am Lichtleiter in eine oder mehrere Vorzugsrichtungen zu lenken. Dabei müssen die Optikelemente einen kleineren Lichtablenkwinkel erreichen, da das Licht günstig im Strak bzw. dem Strakverlauf folgend vorgelenkt ist.

Weitere Vorteile gegenüber dem Stand der Technik ergeben sich durch ein homogenes Erscheinungsbild aus verschiedenen Betrachtungsrichtungen frei von durch das menschliche Auge wahrnehmbaren, unterschiedlichen Helligkeiten unter gleichzeitiger Erfüllung der beispielsweise durch gesetzliche Vorschriften vorgegebenen und die Lichtverteilung in einer oder mehreren Vorzugsrichtungen sowie die Leuchtdichte in der mindestens einen Vorzugsrichtung umfassenden lichttechnischen Anforderungen bei gleichzeitig geringer erforderlicher in den Lichtleiter einzukoppelnder Strahlungsleistung bzw. geringem erforderlichem in den Lichtleiter einzukoppelndem Lichtstrom. Hierdurch wird ein besonders wirtschaftlicher und effektiver Umgang mit der zur Verfügung stehenden Energie erzielt. Bei Kraftfahrzeuganwendungen ergibt sich dadurch eine besonders günstige Auslegung und Dimensionierung des Bordnetzes einhergehend mit einer verbesserten Wirtschaftlichkeit und Gewichtseinsparungen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

Fig. 1     einen Lichtleiter mit zwei jeweils einem von zwei Lichteinkoppelbereichen zugeordneten Lichtauskoppelbereichen, bei dem das von zwei Lichtquellen jeweils an den Lichteinkoppelbereichen in den Lichtleiter eingekoppelte Licht bis zu dessen Auskopplung an den Lichtauskoppelbereichen zunächst im Lichtleiter durch den dem jeweils anderen Lichteinkoppelbereich zugeordneten Lichtauskoppelbereich hindurch geführt und erst dann ausgekoppelt wird.

Fig. 2     ein erstes Ausführungsbeispiel eines Lichtleiters.

Fig. 3     ein zweites Ausführungsbeispiel eines Lichtleiters.

Fig. 4     ein drittes Ausführungsbeispiel eines Lichtleiters.

Fig. 5     ein viertes Ausführungsbeispiel eines Lichtleiters.

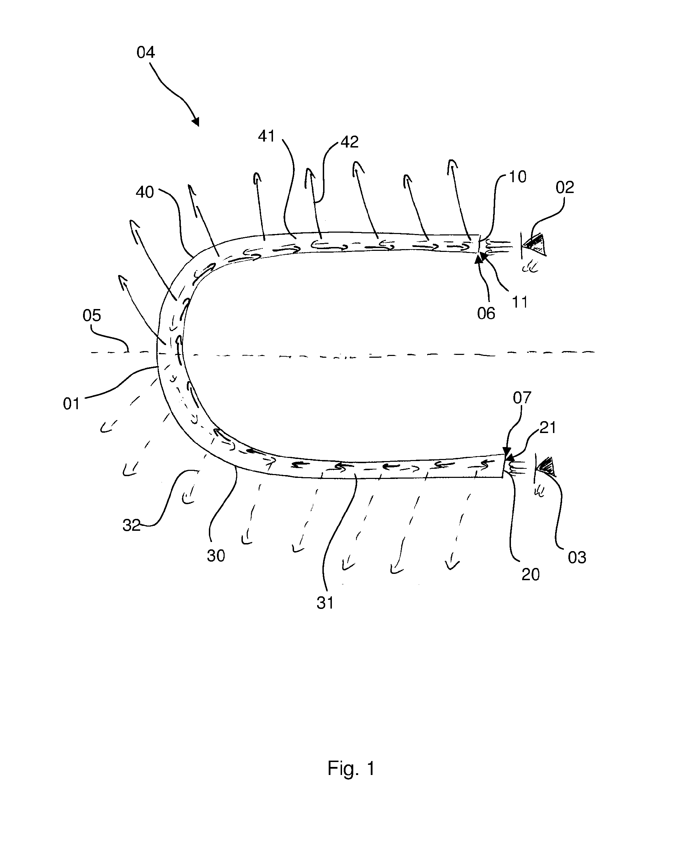

Ein in den Fig. 1 bis Fig. 5 ganz oder in Teilen dargestellter, beispielsweise stabförmiger, vorzugsweise beispielsweise in einer Ebene und/oder besonders bevorzugt dreidimensional im Raum gekrümmt verlaufender Lichtleiter 01 weist einen mindestens eine erste Lichteinkoppelfläche 10 umfassenden ersten Lichteinkoppelbereich 11 und einen mindestens eine zweite Lichteinkoppelfläche 20 umfassenden zweiten Lichteinkoppelbereich 21 auf.

Die erste Lichteinkoppelfläche 10 und der erste Lichteinkoppelbereich 11 sind mindestens einer ersten Lichtquelle 02 eines den Lichtleiter 01 wahlweise umfassenden Leuchtmittels 04 zugeordnet. Die zweite Lichteinkoppelfläche 20 und der zweite Lichteinkoppelbereich 21 sind mindestens einer zweiten Lichtquelle 03 des Leuchtmittels 04 zugeordnet. Die Licht in den ersten Lichteinkoppelbereich 11 und den zweiten Lichteinkoppelbereich 21 einstrahlenden ersten und zweiten Lichtquellen 02, 03 können zur Erfüllung ein und der selben oder verschiedener Lichtfunktionen beispielsweise einer Kraftfahrzeugleuchte vorgesehen sein.

Der Lichtleiter 01 weist einen dem ersten Lichteinkoppelbereich 11 derart zugeordneten, mindestens eine erste Lichtauskoppelfläche 30 umfassenden ersten Lichtauskoppelbereich 31 auf, dass in den ersten Lichteinkoppelbereich 11 eingekoppeltes Licht am ersten Lichtauskoppelbereich 31 aus dem Lichtleiter 01 beispielsweise unter Brechung beim Übergang vom Lichtleitermaterial zum umgebenden Medium, beispielsweise zur umgebenden Luft, in wenigstens einer Vorzugsrichtung 32 ausgekoppelt wird.

Darüber hinaus weist der Lichtleiter 01 einen dem zweiten Lichteinkoppelbereich 21 derart zugeordneten, mindestens eine zweite Lichtauskoppelfläche 40 umfassenden zweiten Lichtauskoppelbereich 41 auf, dass in den zweiten Lichteinkoppelbereich 21 eingekoppeltes Licht am zweiten Lichtauskoppelbereich 41 aus dem Lichtleiter 01 beispielsweise unter Brechung beim Übergang vom Lichtleitermaterial zum umgebenden Medium, beispielsweise zur umgebenden Luft, in wenigstens einer Vorzugsrichtung 42 ausgekoppelt wird.

Die Auskopplung erfolgt beispielsweise unter Einhaltung einer beispielsweise gesetzlich vorgegebenen lichttechnischen Anforderungen an eine Kraftfahrzeugleuchte in einer oder mehreren Vorzugsrichtungen 32, 42 genügenden Leuchtdichte. Die Vorzugsrichtungen 32, 42 können dabei durch eine ebenfalls beispielsweise gesetzlich vorgegebene Lichtverteilung definiert sein.

Die eine oder mehrere Vorzugsrichtungen 32, 42, unter denen das von den mindestens zwei Lichtquellen 02, 03 jeweils an den Lichteinkoppelbereichen 11, 21 in den Lichtleiter 01 eingekoppelte Licht an den Lichtauskoppelbereichen 31, 41 wieder aus dem Lichtleiter 01 ausgekoppelt wird, können dabei identisch, teilweise gleich oder vollständig verschieden sein.

Die verschiedenen, jeweils unterschiedlichen Lichteinkoppelbereichen 11, 21 zugeordneten Lichtauskoppelbereiche 31, 41 können unmittelbar aneinander angrenzen. In Fig. 1 deutet die gestrichelte Linie die Grenze 05 zwischen den verschiedenen, jeweils unterschiedlichen Lichteinkoppelbereichen 11, 21 zugeordneten Lichtauskoppelbereichen 31, 41 an.

Die Lichteinkoppelflächen 10, 20 und die Lichtauskoppelflächen 30, 40 sind dabei vorzugsweise ebenso voneinander verschieden, wie die Lichteinkoppelflächen 10, 20 voneinander verschieden und die Lichtauskoppelflächen 30, 40 voneinander verschieden sind.

Bevorzugt sind die beiden Lichteinkoppelbereiche 11, 21 an zwei gegenüberliegenden, voneinander entfernte Endbereiche 06, 07 des Lichtleiters 01 bildenden und/oder umfassenden Lichteinkoppelflächen 10, 20 vorgesehen.

Der erste Lichtauskoppelbereich 31 ist entfernt zum ersten Lichteinkoppelbereich 11 und benachbart zum zweiten Lichteinkoppelbereich 21 an diesen angrenzend angeordnet. Der zweite Lichtauskoppelbereich 41 ist entfernt zum zweiten Lichteinkoppelbereich 21 und benachbart zum ersten Lichteinkoppelbereich 11 an diesen angrenzend angeordnet.

Das am ersten Lichteinkoppelbereich 11 in den Lichtleiter 01 eingekoppelte Licht wird bis zu dessen Auskopplung am dem ersten Lichteinkoppelbereich 11 zugeordneten ersten Lichtauskoppelbereich 31 zunächst im Lichtleiter 01 durch den zwischen dem ersten Lichteinkoppelbereich 11 und dem ersten Lichtauskoppelbereich 31 liegenden zweiten Lichtauskoppelbereich 41 hindurch geführt und erst dann im ersten Lichtauskoppelbereich 31 ausgekoppelt. Entsprechend wird das am zweiten Lichteinkoppelbereich 21 in den Lichtleiter 01 eingekoppelte Licht bis zu dessen Auskopplung am dem zweiten Lichteinkoppelbereich 21 zugeordneten zweiten Lichtauskoppelbereich 41 zunächst im Lichtleiter 01 durch den zwischen dem zweiten Lichteinkoppelbereich 21 und dem zweiten Lichtauskoppelbereich 41 liegenden ersten Lichtauskoppelbereich 31 hindurch geführt und erst dann im zweiten Lichtauskoppelbereich 41 ausgekoppelt.

Zwischen den einander zugeordneten Lichteinkoppel- und Lichtauskoppelbereichen 11, 31 bzw. 21, 41 liegt so wenigstens ein einem anderen Lichteinkoppelbereich 21 bzw. 11 zugeordneter Lichtauskoppelbereich 41 bzw. 31.

Dadurch kann das Licht zunächst entgegen einer Strakrichtung bzw. einer üblichen Einstrahlrichtung durch einen dem jeweils anderen Lichteinkoppelbereich 11, 21 zugeordneten Lichtauskoppelbereich 41, 31 hindurch geführt und erst dann in einem zur Lichtauskopplung günstigen Bereich des Straks ausgekoppelt werden.

Die beiden Lichteinkoppelbereiche 11, 21 sind bevorzugt an zwei gegenüberliegenden, Endbereiche des Lichtleiters 01 bildenden Lichteinkoppelflächen 10, 20 vorgesehen, wodurch eine beidseitige Lichteinkopplung in den Lichtleiter 01 verwirklicht ist.

Der Lichtleiter 01 kann als ein gekrümmt verlaufender Stablichtleiter mit einer beispielsweise C-, F-, J-, T-, γ-, L-, G-, V-, U-, M oder W-förmigen Grundform ausgebildet sein. Unabhängig von der Grundform findet die Einkopplung von Licht wenigstens zweier vorzugsweise unabhängiger Lichtquellen 02, 03 an wenigstens zwei voneinander entfernten Lichteinkoppelbereichen 11, 21 statt.

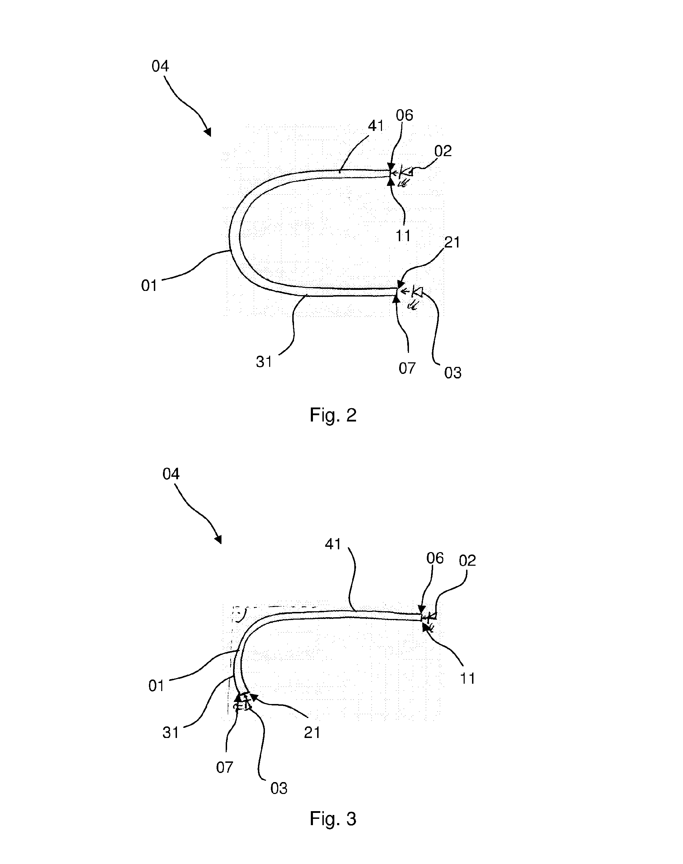

So weist der in Fig. 2 dargestellte Lichtleiter 01 eine C- bzw. U-förmige Grundform auf, wohingegen der in Fig. 3 dargestellte Lichtleiter 01 eine J bzw. L-förmige Grundform aufweist.

Bei bestimmten Grundformen kann es vorkommen, dass zusätzlich zu den getrennten, jeweils einem Lichteinkoppelbereich 11, 21 zugeordneten Lichtauskoppelbereichen 31, 41 ein oder mehrere, zwei oder mehreren, beispielsweise allen Lichteinkoppelbereichen 11, 21 zugeordnete gemeinsame Lichtauskoppelbereiche 51 mit wenigstens einer gemeinsamen Lichtauskoppelfläche vorgesehen sind. An einem solchen gemeinsamen Lichtauskoppelbereich 51 wird das von mehreren, verschiedenen Lichteinkoppelbereichen 11, 21 zugeordneten Lichtquellen 02, 03 in den Lichtleiter 01 eingekoppelte Licht aus dem Lichtleiter 01 beispielsweise unter Brechung beim Übergang vom Lichtleitermaterial zum umgebenden Medium, beispielsweise zur umgebenden Luft, in vorzugsweise wenigstens einer Vorzugsrichtung 32, 42 ausgekoppelt.

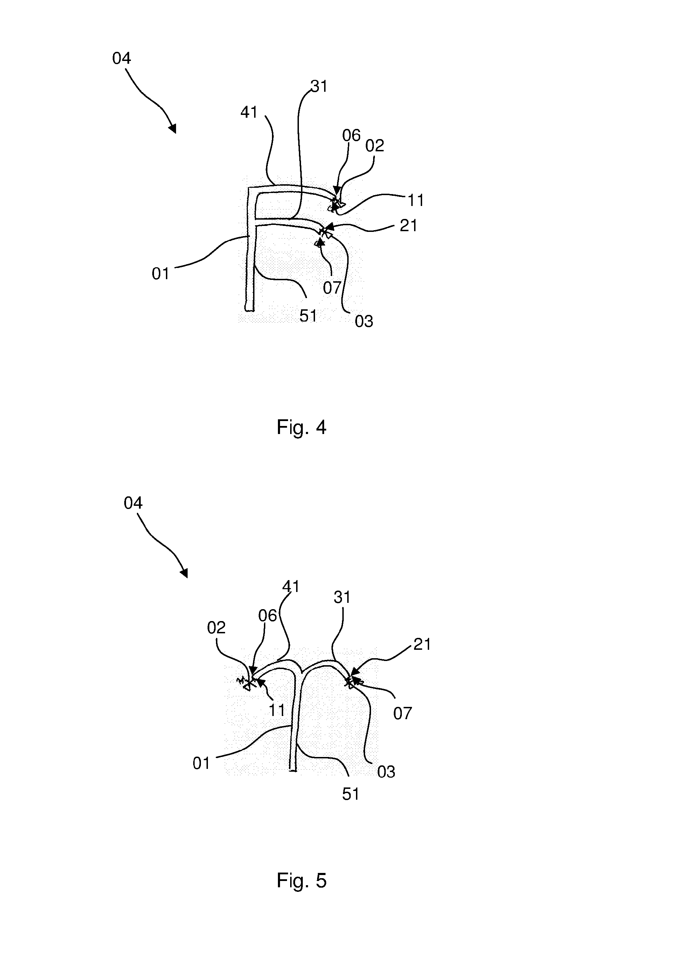

Beispielsweise weist der in Fig. 4 dargestellte Lichtleiter 01 mit einer F-förmigen Grundform neben einem einem ersten Lichteinkoppelbereich 11 zugeordneten ersten Lichtauskoppelbereich 31 und neben einem einem zweiten Lichteinkoppelbereich 21 zugeordneten zweiten Lichtauskoppelbereich 41 einen beiden Lichtkoppelbereichen 11, 21 gleichermaßen zugeordneten gemeinsamen Lichtauskoppelbereich 51 auf.

Ebenfalls weist der in Fig. 5 dargestellte Lichtleiter 01 mit einer γ-förmigen Grundform neben einem einem ersten Lichteinkoppelbereich 11 zugeordneten ersten Lichtauskoppelbereich 31 und neben einem einem zweiten Lichteinkoppelbereich 21 zugeordneten zweiten Lichtauskoppelbereich 41 einen beiden Lichteinkoppelbereichen 11, 21 gleichermaßen zugeordneten gemeinsamen Lichtauskoppelbereich 51 auf.

Um das in den Lichtleiter 01 eingekoppelte Licht derart umzulenken, so dass es in den Lichtauskoppelbereichen 31, 41 wieder aus dem Lichtleiter 01 heraus tritt, steht das in den Lichtleiter 01 eingekoppelte Licht und die Geometrie einer beispielsweise auf mindestens einer einer oder beiden Lichtauskoppelbereichen 31, 41 zugehörigen Lichtumlenkfläche vorzugsweise vorgesehenen, wenigstens eine Auskoppelprismen-Gegenfacette umfassenden Prismenstruktur in folgendem Verhältnis:

$$\varphi \leq 90° - 2 \cdot \gamma - \alpha_{grenz}$$

und

$$\alpha_{grenz} = \arcsin\left(\frac{n_2}{n_1}\right)$$

mit:

$n_1$ = Brechzahl des optisch dichteren Mediums, vorzugsweise dem Lichtleitermaterial, besonders bevorzugt PMMA (PMMA; Polymethylmethacrylat),

$n_2$ = Brechzahl des optisch dünneren Mediums, vorzugsweise des den Lichtleiter 01 umgebenden Mediums, insbesondere Luft,

wobei φ den halben Öffnungswinkel des tangential in den Lichtleiter 01 eingekoppelten Lichtkegels, γ dem Anstellwinkel der Auskoppelprismen-Gegenfacette in Bezug auf die auch als Lichtleiterachse bezeichnete, beispielsweise lokale Mittelachse des Lichtleiters 01 und $\alpha_{grenz}$ dem Grenzwinkel der Totalreflexion im verwendeten Lichtleitermaterial entspricht. Einzelne Prismen können auch von dieser Beziehung abweichen - wodurch Licht durch die Gegenprismen auch ausgekoppelt werden kann.

Grundsätzlich müssen in einem die mindestens eine Lichtumlenkfläche umfassenden Bereich nicht zwingend Prismenstrukturen oder andere Optikelemente angebracht sein. Sollten diese ausgeführt sein - was für eine vollständige Ausleuchtung des Lichtleiters 01 vorteilhaft ist - lenken diese das an den vorzugsweise gegenüberliegenden Enden eines Lichtleiters 01, wie beispielsweise eines in Fig. 1 und Fig. 2 dargestellten C-förmigen Stablichtleiters, befindlichen Lichteinkoppelbereichen 11, 21 von den dort angeordneten Lichtquellen 02, 03 eingekoppelte Licht in einer Richtung um, bei der das Licht beim Austritt aus dem Lichtleiter 01 im jeweils vom zugeordneten Lichteinkoppelbereich 11, 21 entfernten Lichtauskoppelbereich 31, 41 beim Übergang vom Lichtleitermaterial zum umgebenden Medium in die wenigstens eine Vorzugsrichtung 32, 42 gebrochen wird.

Wichtig ist hervorzuheben, dass Licht bei einem stabförmigen Lichtleiter 01 auch an nur einem Ende eingekoppelt werden kann, welches Ende beispielsweise nicht direkt im Blickfeld eines beispielsweise von außerhalb einer Kraftfahrzeugleuchte durch deren Lichtscheibe hindurch schauenden Betrachters liegt.

Soll jedoch wie erfindungsgemäß verwirklicht der gesamte Lichtleiter 01 homogen ausgeleuchtet erscheinen, ist eine beidseitige Lichteinkopplung nötig.

Ebenfalls wichtig ist hervorzuheben, dass der Strakverlauf in einem Bereich, in dem als Heckleuchten ausgebildete Kraftfahrzeugleuchten angebracht sind, typischerweise in negativer x-Richtung zur Kraftfahrzeugaußenseite hin verläuft. Hierdurch weisen Heckleuchten einen Neigungswinkel auf, der zur Fahrzeugvorderseite hin zeigt. Sollte also fahrzeuginnenseitig Licht eingekoppelt werden und sich der Lichtleiter näherungsweise in Straklage befinden, dann muss das Licht um in eine nach hinten gerichtete Vorzugsrichtung gelenkt zu werden - um mehr als 90° abgelenkt werden.

Bei der Erfindung wird bevorzugt auf eine Spiegelung von Licht an den die Lichteinkoppelflächen 10, 20 der Lichteinkoppelbereiche 11, 21 bildenden Endflächen verzichtet. Es kann dadurch erforderlich sein, dass der Lichtleiter 01 so ausgeführt ist, dass er einen größeren projizierten Winkel als 90° in der yz-Ebene einschließt.

Die Erfindung ist insbesondere im Bereich der Herstellung von Lichtleitern und Leuchtmitteln für Kraftfahrzeugleuchten sowie der Herstellung von Kraftfahrzeugleuchten selbst gewerblich anwendbar.

**Bezugszeichenliste**

01 Lichtleiter

02 erste Lichtquelle

03 zweite Lichtquelle

04 Leuchtmittel

05 Grenze

06 Endbereich

07 Endbereich

10 erste Lichteinkoppelfläche

11 erster Lichteinkoppelbereich

20 zweite Lichteinkoppelfläche

21 zweiter Lichteinkoppelbereich

30 erste Lichtauskoppelfläche

31 erster Lichtauskoppelbereich

32 Vorzugsrichtung

40 zweite Lichtauskoppelfläche

41 zweiter Lichtauskoppelbereich

42 Vorzugsrichtung

51 gemeinsamer Lichtauskoppelbereich

**Patentansprüche**

1. Lichtleiter (01) mit mindestens einer Lichteinkoppelfläche (10, 20) und mindestens einer von der wenigstens einen Lichteinkoppelfläche (10, 20) verschiedenen Lichtauskoppelfläche (30, 40),
**gekennzeichnet durch** wenigstens:

  - einen mindestens eine erste Lichteinkoppelfläche (10) umfassenden ersten Lichteinkoppelbereich (11),
  - einen mindestens eine zweite Lichteinkoppelfläche (20) umfassenden zweiten Lichteinkoppelbereich (21),
  - einen dem ersten Lichteinkoppelbereich (11) derart zugeordneten, mindestens eine erste Lichtauskoppelfläche (30) umfassenden ersten Lichtauskoppelbereich (31), dass in den ersten Lichteinkoppelbereich (11) eingekoppeltes Licht am ersten Lichtauskoppelbereich (31) aus dem Lichtleiter (01) in wenigstens einer Vorzugsrichtung (32) ausgekoppelt wird,
  - einen dem zweiten Lichteinkoppelbereich (21) derart zugeordneten, mindestens eine zweite Lichtauskoppelfläche (40) umfassenden zweiten Lichtauskoppelbereich (41), dass in den zweiten Lichteinkoppelbereich (21) eingekoppeltes Licht am zweiten Lichtauskoppelbereich (41) aus dem Lichtleiter (01) in wenigstens einer Vorzugsrichtung (42) ausgekoppelt wird, wobei
  - der erste Lichtauskoppelbereich (31) entfernt zum ersten Lichteinkoppelbereich (11) und benachbart zum zweiten Lichteinkoppelbereich (21) angeordnet ist, und
  - der zweite Lichtauskoppelbereich (41) entfernt zum zweiten Lichteinkoppelbereich (21) und benachbart zum ersten Lichteinkoppelbereich (11) angeordnet ist, und
  - zwischen den einander zugeordneten Lichteinkoppel- und Lichtauskoppelbereichen (11, 31 bzw. 21, 41) wenigstens ein einem anderen Lichteinkoppelbereich (21, 11) zugeordneter Lichtauskoppelbereich (41, 31) liegt.

2. Lichtleiter nach Anspruch 1,
**dadurch gekennzeichnet,**
**dass** das in den Lichteinkoppelbereichen (11, 21) jeweils eingekoppelte Licht zunächst über mindestens ein Viertel des Lichtleiters (01) durch einen dem jeweils anderen Lichteinkoppelbereich (21, 11) zugeordneten Lichtauskoppelbereich (41, 31) hindurch geführt und erst dann in jeweils den Lichteinkoppelbereichen (11, 21) zugeordneten Lichtauskoppelbereichen (31, 41) ausgekoppelt wird.

3. Lichtleiter nach Anspruch 1 oder 2,
**dadurch gekennzeichnet,**
**dass** die beiden Lichteinkoppelbereiche (11, 21) an zwei gegenüberliegenden, Endbereiche (06, 07) des Lichtleiters (01) bildenden Lichteinkoppelflächen (10, 20) vorgesehen sind.

4. Lichtleiter nach Anspruch 1, 2 oder 3,
**dadurch gekennzeichnet,**
**dass** der Lichtleiter (01) stabförmig ist, wobei die beiden Endbereiche (06, 07) abschließende Stirnseiten des stabförmigen Lichtleiters (01) jeweils eine Lichteinkoppelfläche (10, 20) bilden, welche eine sich entlang mindestens einer Mittelachse des Lichtleiters (01) erstrekkende und zumindest jeweils eine Lichtauskoppelfläche (30, 40) des ersten Lichtauskoppelbereichs (31) und des zweiten Lichtauskoppelbereichs (41) umfassende Lichtleitervorderseite mit einer sich entlang einer Mittelachse des Lichtleiters (01) erstreckenden Lichtleiterrückseite verbindet.

5.  Lichtleiter nach Anspruch 4,
    **gekennzeichnet durch**
    eine C-, F-, J-, T-, γ-, L-, G-, V-, U-, M oder W-förmige Grundform des Lichtleiters (01).

6.  Lichtleiter nach einem der vorhergehenden Ansprüche,
    **dadurch gekennzeichnet,**
    **dass** mindestens eine Lichtumlenkfläche auf wenigstens einer den Lichtauskoppelflächen (30, 40) der beiden Lichtauskoppelbereiche (31, 41) gegenüberliegenden Lichtleiterrückseite angeordnet oder von einer solchen umfasst ist oder eine solche umfasst.

7.  Lichtleiter nach einem der vorhergehenden Ansprüche,
    **dadurch gekennzeichnet,**
    **dass** mindestens eine Lichtumlenkfläche zumindest zum Teil wenigstens eine Prismenstruktur umfasst, vermittels der in den Lichtleiter (01) an wenigstens einer Lichteinkoppelfläche (10, 20) eingekoppeltes Licht gezielt in einer oder mehreren Richtungen zur der jeweiligen Lichteinkoppelfläche (10, 20) zugeordneten Lichtauskoppelfläche (30, 40) hin umgelenkt und an der Lichtauskoppelfläche (30, 40) unter Brechung beim Übergang vom Lichtleitermaterial zum umgebenden Medium in wenigstens einer Vorzugsrichtung (32, 42) ausgekoppelt wird.

8.  Lichtleiter nach einem der vorhergehenden Ansprüche,
    **dadurch gekennzeichnet,**
    **dass** die Lichtauskoppelbereiche (31, 41) mit wenigstens einer Diffusor-Struktur versehen sind, vermittels der in den Lichtleiter (01) an den Lichteinkoppelbereichen (10, 20) eingekoppeltes Licht mit einer statistischen Verteilung umgelenkt und an den Lichtauskoppelflächen (30, 40) unter Brechung beim Übergang vom Lichtleitermaterial zum umgebenden Medium diffus ausgekoppelt wird.

9.  Lichtleiter nach einem der vorhergehenden Ansprüche,
    **gekennzeichnet durch**
    einen gekrümmten Verlauf des Lichtleiters (01).

10. Leuchtmittel (04) umfassend mindestens zwei Lichtquellen (02, 03) sowie wenigstens einen den Lichtquellen (02, 03) zugeordneten Lichtleiter (01), **gekennzeichnet durch**
einen Lichtleiter (01) nach einem der vorhergehenden Ansprüche, in den Licht mindestens zweier Lichtquellen (02, 03) an mindestens zwei verschiedenen Lichteinkoppelbereichen (11, 21) zugeordneten Lichteinkoppelflächen (10, 20) ein-und an mindestens zwei, verschiedenen Lichtauskoppelbereichen (31, 41) zugeordneten, von den Lichteinkoppelflächen (10, 20) verschiedenen Lichtauskoppelflächen (30, 40) wieder ausgekoppelt wird.

11. Kraftfahrzeugleuchte mit einem von einem Leuchtengehäuse und einer Lichtscheibe umschlossenen Leuchteninnenraum, mindestens einem in dem Leuchteninnenraum untergebrachten Leuchtmittel (04) zur Erfüllung mindestens einer Lichtfunktion,
    **gekennzeichnet durch**
    ein Leuchtmittel (04) nach Anspruch 10 mit einem Lichtleiter (01) nach einem der Ansprüche 1 bis 9.

Fig. 1

Fig. 2

Fig. 3

Fig. 4

Fig. 5

Europäisches
Patentamt

European
Patent Office

Office européen
des brevets

# EUROPÄISCHER RECHERCHENBERICHT

Nummer der Anmeldung

EP 11 17 6532

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2002/135997 A1 (LAMMERS LIANE [NL])<br>26. September 2002 (2002-09-26)<br>* Abbildungen 1,2 *<br>* Absatz [0018] - Absatz [0020] *<br>* Absatz [0051] - Absatz [0063] *<br>----- | 1-3,5-8,<br>10<br>4,9,11 | INV.<br>F21S8/00<br>F21V7/00<br><br>ADD.<br>G02B6/00 |
| X | US 2005/180167 A1 (HOELEN CHRISTOPH G A [NL] ET AL HOELEN CHRISTOPH GERARD AUGUST [NL] ET) 18. August 2005 (2005-08-18)<br>* Abbildungen 1-3B *<br>* Absatz [0044] - Absatz [0054] *<br>----- | 1-3,6-8,<br>10 | |
| X | WO 99/64785 A1 (ZUMTOBEL STAFF GMBH [AT]; EDMONDS ROBERT IAN [AU])<br>16. Dezember 1999 (1999-12-16)<br>* Abbildung 15 *<br>* Seite 12 *<br>----- | 1-3,6,10 | |
| Y | US 2008/239721 A1 (MEZOUARI SAMIR [GB])<br>2. Oktober 2008 (2008-10-02)<br>* Abbildungen 1,2 *<br>* Absatz [0002] *<br>----- | 4,9,11 | RECHERCHIERTE SACHGEBIETE (IPC)<br><br>G02B<br>B60Q<br>F21S<br>F21V |

Der vorliegende Recherchenbericht wurde für alle Patentansprüche erstellt

| Recherchenort | Abschlußdatum der Recherche | Prüfer |
|---|---|---|
| München | 23. November 2011 | Beutter, Matthias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
  ...........................................................................................
& : Mitglied der gleichen Patentfamilie, übereinstimmendes
    Dokument

EPO FORM 1503 03.82 (P04C03)

# EP 2 554 897 A1

## ANHANG ZUM EUROPÄISCHEN RECHERCHENBERICHT
## ÜBER DIE EUROPÄISCHE PATENTANMELDUNG NR.

EP 11 17 6532

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2011

| Im Recherchenbericht angeführtes Patentdokument | Datum der Veröffentlichung | Mitglied(er) der Patentfamilie | | Datum der Veröffentlichung |
|---|---|---|---|---|
| US 2002135997 A1 | 26-09-2002 | CN | 1406325 A | 26-03-2003 |
| | | EP | 1247044 A1 | 09-10-2002 |
| | | JP | 2004512643 A | 22-04-2004 |
| | | MX | PA02006204 A | 05-12-2002 |
| | | TW | 557373 B | 11-10-2003 |
| | | US | 2002135997 A1 | 26-09-2002 |
| | | WO | 0235145 A1 | 02-05-2002 |
| US 2005180167 A1 | 18-08-2005 | AT | 527562 T | 15-10-2011 |
| | | AU | 2003212589 A1 | 13-10-2003 |
| | | CN | 1643409 A | 20-07-2005 |
| | | EP | 1493050 A1 | 05-01-2005 |
| | | JP | 4273002 B2 | 03-06-2009 |
| | | JP | 2005524194 A | 11-08-2005 |
| | | TW | I283781 B | 11-07-2007 |
| | | US | 2005180167 A1 | 18-08-2005 |
| | | WO | 03083530 A1 | 09-10-2003 |
| WO 9964785 A1 | 16-12-1999 | AT | 250201 T | 15-10-2003 |
| | | DE | 69911403 D1 | 23-10-2003 |
| | | DE | 69911403 T2 | 24-06-2004 |
| | | EP | 1084366 A1 | 21-03-2001 |
| | | WO | 9964785 A1 | 16-12-1999 |
| US 2008239721 A1 | 02-10-2008 | DE | 102008000766 A1 | 11-12-2008 |
| | | GB | 2447936 A | 01-10-2008 |
| | | US | 2008239721 A1 | 02-10-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7431481 B2
- US 7401963 B2
- EP 1561070 B1
- DE 19804440 A1